# FASCICULE DE BREVET EUROPEEN

(11) **EP 1 174 832 B1**
(45) Date de publication et mention de la délivrance du brevet: **17.09.2008**
(21) Numéro de dépôt: 01401921.0
(22) Date de dépôt: 18.07.2001
(51) Int. Cl.: G07C 9/00

(54) **Processeur de génération et de transmission de signature électronique et terminal de réseau de radiotéléphonie comportant un tel processeur**
Prozessor zur Erzeugung und Übertragung einer elektronischen Unterschrift und Endgerät für ein Funktelefonnetzwerk mit einem solchen Prozessor
Processor for generation and transmission of an electronic signature and terminal for a radiotelephone network comprising such a processor

(30) Priorité: 19.07.2000 FR 0009450
(43) Date de publication de la demande: 23.01.2002
(73) Titulaire: SAGEM Sécurité, 75015 Paris (FR)
(72) Inventeur: Chabanne, Hervé, 78200 Mantes la Jolie (FR)
(74) Mandataire: Bloch, Gérard

(56) Documents cités:
- EP-A- 0 969 644
- WO-A-00/28721
- WO-A-99/54851
- BROMBA M ET AL: "DAUMEN ALS SCHLUESSEL" FUNKSCHAU,FRANZIS-VERLAG K.G. MUNCHEN,DE, vol. 71, no. 13, 12 juin 1998 (1998-06-12), pages 36-39, XP000832287 ISSN: 0016-2841

## Description

La présente invention concerne la génération et la transmission de signature électronique.

Le développement des réseaux téléphoniques et informatiques transmettant les données, comme l'Internet, a entraîné une croissance élevée du commerce électronique. L'utilisateur d'un terminal, ayant appelé un serveur de téléachat, peut très rapidement effectuer des achats.

Il est connu par les documents « GSM technical spécifications GSM 11.11 » et «WAP WIM Version 05-Nov-1 99 », des réseaux de communication et des applications permettant de transférer des données

Pour identifier l'acheteur, et en particulier pour disposer du numéro de compte bancaire à débiter, le serveur requiert une signature électronique contenant ces informations.

Pour éviter les fraudes, et en particulier en cas de vol du terminal, ce dernier ne peut émettre une signature valide qu'après saisie de données secrètes, comme par exemple un mot de code PIN dans le cas d'un terminal de réseau de radiotéléphonie cellulaire. L'utilisateur doit toutefois avoir en mémoire le numéro PIN et la protection offerte n'est pas absolue.

La présente invention vise à proposer une autre solution pour protéger la signature.

A cet effet, l'invention concerne tout d'abord un processeur WIM comprenant des moyens de génération et de transmission de signature électronique et des moyens de traitement de données biométriques, caractérisé par le fait que lesdits moyens de traitement sont agencés pour contrôler les moyens de génération et de transmission de signature électronique et les moyens de génération et de transmission de signature électronique sont agencés pour contrôler un logiciel WAP d'application externe d'échanges de données avec un équipement distant.

Ainsi, le processeur forme un bloc unique de traitement qui comprend à la fois les moyens de génération et de transmission de signature et les moyens de traitement de données biométriques qui les contrôlent. L'utilisateur peut donc ainsi contrôler efficacement et facilement la transmission de sa signature par ses données biométriques.

L'invention concerne aussi un terminal de réseau de radiotéléphonie comportant un processeur WIM comprenant des moyens de génération et de transmission de signature électronique destinés à commander des moyens radio d'échange de données avec le réseau, caractérisé par le fait que le processeur comprend des moyens de traitement de données biométriques agencés pour contrôler les moyens de génération et de transmission de signature électronique.

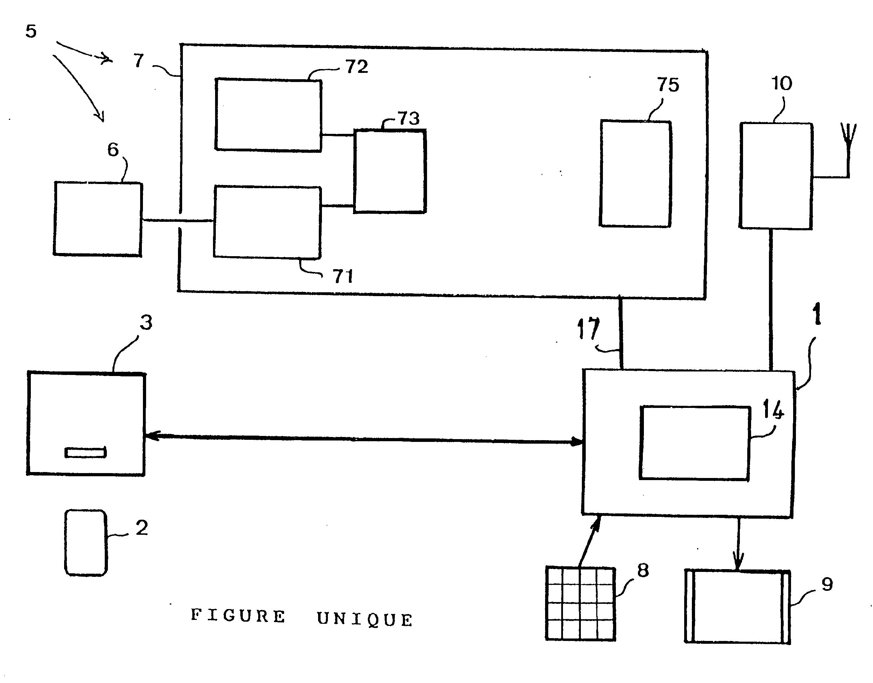

L'invention sera mieux comprise à l'aide de la description suivante d'une forme de réalisation préférée du processeur de l'invention, en référence à la figure unique qui représente schématiquement un terminal téléphonique comportant le processeur.

Le terminal représenté, ici un combiné du réseau de radiotéléphonie cellulaire GSM, comporte un microcontrôleur 1 de gestion de données d'exploitation de fonctions téléphoniques, relié à un clavier 8 et à un écran 9 ainsi qu'à des circuits radio 10 d'émission/réception de données pour établir des communications téléphoniques à travers le réseau GSM. Les microphone et haut-parleur classiques n'ont pas été représentés.

L'accès au réseau est contrôlé par un microprocesseur d'une carte à puce 2 d'identification d'abonné, appelée SIM, reliée au microcontrôleur 1 par une première chaîne ou liaison bidirectionnelle de contrôle du microcontrôleur 1, constituée par un lecteur d'entrée/sortie correspondant 3.

Par ailleurs, le microcontrôleur 1 est de même contrôlé ou activé par une deuxième chaîne 5 comportant un capteur 6 d'une caractéristique physique, ou données biométriques, d'un utilisateur du terminal, ici un capteur de l'image de ses empreintes digitales. Dans un autre exemple, ce pourrait être un circuit de reconnaissance de l'image de la rétine ou encore de la voix, ou autre. Le capteur 6 est relié à un processeur 7, ici un microprocesseur, qui saisit les données d'image électronique fournies par le capteur 6 et les code avec compression sous forme de données caractéristiques par un module logiciel ou fonction de codage 71. Il s'agit en particulier des positions relatives de points caractéristiques, d'intersection de sillons et autres reliefs de la peau. Ces données codées sont comparées, par un module logiciel de comparaison 73, à des données homologues d'utilisateurs autorisés préalablement mémorisées dans une mémoire-bibliothèque 72 par des circuits non représentés. En cas de reconnaissance de l'empreinte saisie, valable, le microprocesseur 7 autorise l'accès aux fonctions offertes par le terminal.

Par ailleurs, le microcontrôleur 1 comporte un module logiciel 14 contenant un logiciel d'application, selon ici le protocole WAP, pour traiter au moins une application déterminée par échange de données, à travers le réseau GSM, avec un équipement distant, tel qu'un serveur d'un site Internet, par exemple de téléachat.

Pour sécuriser les données de l'application échangées par le terminal à travers le réseau GSM, et ici l'Internet, le microprocesseur 7 comporte un module logiciel 75 de fonctions de sécurisation, ici WIM (Module d'identification WAP), et précisément de cryptage-décryptage pour en particulier engendrer et transmettre une signature électronique.

Le fonctionnement des circuits du terminal va maintenant être expliqué plus en détails.

Pour établir une liaison de données avec un serveur traitant l'application du microcontrôleur 1, ici de téléachat, l'utilisateur du terminal établit d'abord une communication téléphonique pour atteindre ce serveur à travers le réseau GSM.

L'utilisateur lance sur le réseau GSM une requête d'établissement de communication avec le serveur considéré. Le réseau GSM répond par un message demandant de fournir la preuve de l'abonnement au réseau GSM, contenue dans la carte SIM 2. Le microcontrôleur 1 commande alors la lecture de la carte à puce 2 pour en recevoir la preuve requise, que le microcontrôleur 1 émet ensuite vers le réseau GSM sous la forme voulue.

En outre ici, le capteur 6 sert à effectuer un contrôle d'accès supplémentaire, c'est-à-dire qu'il autorise l'utilisateur à accéder aux fonctions du terminal et en particulier n'autorise l'établissement d'une communication GSM que lorsqu'il l'a reconnu comme un utilisateur valide. Outre la fourniture de la carte SIM 2 avec un mot de code PIN, l'utilisateur doit poser le doigt prévu sur le capteur 6 et les modules logiciels et mémoire 71 à 73 n'autorisent le microcontrôleur 1 à répondre au message du réseau GSM, donc à y accéder pour échanger des données utiles de communication, que si l'empreinte est reconnue.

Dans cet exemple, il est en outre prévu une variante permettant d'éviter la nécessité de saisir le mot de code PIN. A cet effet, lorsque le module de comparaison 73 fournit un signal de reconnaissance indiquant que l'empreinte saisie est reconnue, il émet en outre et transmet, à la carte à puce 2, par une liaison 17 reliant le microprocesseur 7 au microcontrôleur 1, le mot de code PIN correspondant, préalablement stocké en mémoire dans le microprocesseur 7. Le microprocesseur de la carte à puce 2, auquel le mot PIN est transmis, peut alors vérifier son appariement avec les données de la carte à puce 2.

Le microprocesseur 7, d'abord utilisé pour le contrôle d'accès au terminal, sert ensuite à traiter l'application visée, avec les fonctions WIM.

L'utilisateur du terminal dialogue avec le serveur, vocalement et/ou par écrit au moyen du clavier 8 et de l'écran 9, et le microcontrôleur 1 exécute à cet effet des transactions informatiques sous la commande du module logiciel 14, c'est-à-dire des échanges de données avec le serveur, visant à sélectionner un objet en catalogue et à transmettre un ordre d'achat de cet objet déterminé. Cet objet est parfaitement identifié quant à sa nature, son prix, ses modalités de livraison et autres conditions de vente par les échanges de données ci-dessus. Il convient alors, par les fonctions WIM du module logiciel 75, de certifier la commande qui va être passée, c'est-à-dire authentifier l'identité de l'utilisateur et donc sa signature électronique de la commande, que reçoit le serveur.

Pour les fonctions WIM, le capteur 6 est alors à nouveau utilisé. L'utilisateur, recevant du serveur une demande de certification de sa commande, pose son doigt sur le capteur 6 et le module logiciel de comparaison 73 fournit alors le signal de reconnaissance. Le module logiciel d'application 14 est ainsi contrôlé par le module logiciel de comparaison 73 et le microprocesseur 7 peut alors activer ses fonctions de sécurisation du module logiciel 75 pour valider la commande, par émission radio d'une signature électronique de l'utilisateur. Le module logiciel 75 coopère ainsi avec le module logiciel d'application 14, externe au microprocesseur 7 et contrôlé par les modules logiciels et mémoire 71 à 73.

Les modules logiciels et mémoire 71 à 73 de traitement de données biométriques contrôlent ainsi la génération et la transmission de la signature électronique par les fonctions WIM du module logiciel 75.

D'une façon plus générale ici, le module logiciel 14 de traitement de données échangées par protocole applicatif à travers le réseau GSM est aussi contrôlé par les modules logiciels et circuits 71 à 73. Les fonctions WIM du module logiciel 75 permettant en particulier d'adapter la signature au format de transmission du réseau GSM et de commander ou contrôler les circuits radio 10 à travers le microcontrôleur 1 et en particulier à travers son module 14.

Les fonctions du module logiciel 75 sécurisent ici toutes les données, signature et autres, échangées avec le réseau GSM, le cryptage d'émission et décryptage de réception permettant d'en préserver la confidentialité et de détecter toute altération de celles-ci.

Dans une variante de réalisation, et en ce qui concerne le contrôle d'accès au réseau GSM, le module logiciel de comparaison 73 pour la reconnaissance des empreintes digitales contrôle les fonctions de sécurisation WIM du module logiciel 75 et, en l'absence de reconnaissance d'empreintes, il inhibe le module logiciel 75 pour ainsi bloquer les échanges de données avec le réseau GSM.

Le microprocesseur 7 offre une bonne protection locale contre des tentatives d'intrusion dans ses modules logiciels, visant à contourner les sécurités qu'ils offrent, puisque ces modules logiciels sont intégrés dans une seule puce électronique et donc d'accès difficile.

D'une façon générale, l'application traitée par le terminal peut être indépendante du sens de l'appel téléphonique et peut donc aussi concerner un appel entrant.

## Revendications

1. Processeur WIM comprenant des moyens (75) de génération et de transmission de signature électronique et des moyens (71-73) de traitement de données biométriques, **caractérisé par le fait que** lesdits moyens de traitement sont agencés pour contrôler les moyens (75) de génération et de transmission de signature électronique et les moyens (75) de génération et de transmission de signature électronique sont agencés pour , contrôler un logiciel WAP d'application (14) externe d'échanges de données avec un équipement distant.

2. Processeur selon la revendication 1, dans lequel il est prévu des moyens (75) pour adapter la signature électronique à un format de transmission par radiotéléphonie cellulaire.

3. Processeur selon l'une des revendications 1 et 2, dans lequel les moyens de traitement de données biométriques (71-73) sont agencés pour émettre un mot de code PIN.

4. Terminal de réseau de radiotéléphonie comportant un processeur WIM (7) comprenant un logiciel WAP d'application (14) d'échanges de données avec un équipement distant connecté audit réseau à travers ledit réseau et des moyens (75) de génération et de transmission de signature électronique pour contrôler ledit échange de données, **caractérisé par le fait que** le processeur (7) comprend des moyens (71-73) de traitement de données biométriques agencés pour contrôler les moyens (75) de génération et de transmission de signature électronique.

5. Terminal selon la revendication 4, dans lequel le processeur (7) est relié à un capteur (6) d'empreintes digitales.

## Claims

1. WIM processor comprising means (75) for generation and transmission of an electronic signature and means (71 - 73) for processing biometric data, **characterised in that** said processing means are provided in order to control the means (75) for generation and transmission of an electronic signature and the means (75) for generation and transmission of an electronic signature are provided in order to control WAP external application software (14) for exchanging data with remote equipment.

2. Processor according to claim 1, in which there are provided means (75) for adapting the electronic signature to a format for transmission by cellular radiotelephony.

3. Processor according to one of the claims 1 and 2, in which the means for processing biometric data (71 - 73) are provided for transmitting a PIN code word.

4. Radiotelephone network terminal comprising a WIM processor (7) comprising WAP application software (14) for exchanging data with remote equipment which is connected to said network across said network and means (75) for generation and transmission of an electronic signature in order to control said exchange of data, **characterised in that** the processor (7) comprises means (71 - 73) for processing biometric data provided in order to control the means (75) for generation and transmission of an electronic signature.

5. Terminal according to claim 4, in which the processor (7) is connected to a sensor (6) for fingerprints.

## Patentansprüche

1. WIM-Prozessor mit Mitteln (75) zur Erzeugung und Übertragung einer elektronischen Signatur und mit Mitteln (71 - 73) zur Verarbeitung von biometrischen Daten, **dadurch gekennzeichnet, dass** die Mittel zur Verarbeitung eingerichtet sind, um die Mittel (75) zur Erzeugung und Übertragung einer elektronischen Signatur zu steuern, und die Mittel (75) zur Erzeugung und Übertragung einer elektronischen Signatur eingerichtet sind, um eine externe WAP-Anwendungssoftware (14) zum Datenaustausch mit einer entfernten Einrichtung zu steuern.

2. Prozessor nach Anspruch 1, wobei Mittel (75) zur Anpassung der elektronischen Signatur an ein Format zur Übertragung mit Hilfe zellularer Funktelefonie vorgesehen sind.

3. Prozessor nach einem der Ansprüche 1 oder 2, wobei die Mittel (71 - 73) zur Verarbeitung von biometrischen Daten eingerichtet sind, um ein PIN-Codewort zu senden.

4. Funktelefonnetz-Endgerät mit einem WIM-Prozessor (7), der eine WAP-Anwendungssoftware (14) zum Datenaustausch über das Netz mit einer mit dem Netz verbundenen entfernten Einrichtung und Mittel (75) zur Erzeugung und Übertragung einer elektronischen Signatur aufweist, um den Datenaustausch zu steuern, **dadurch gekennzeichnet, dass** der Prozessor (7) Mittel (71 - 73) zur Verarbeitung von biometrischen Daten aufweist, die eingerichtet sind, um die Mittel (75) zur Erzeugung und Übertragung einer elektronischen Signatur zu steuern.

5. Endgerät nach Anspruch 4, wobei der Prozessor (7) mit einem Aufnehmer (6) für Fingerabdrücke verbunden ist.
